# EUROPEAN PATENT APPLICATION

(11) **EP 1 737 223 A2**
(43) Date of publication of application: **27.12.2006**
(21) Application number: 06253030.8
(22) Date of filing: 13.06.2006
(51) Int. Cl.: H04N 5/74

(54) **Projector unit and projection television apparatus**

(30) Priority: 21.06.2005 JP 2005181081
(71) Applicant: SONY CORPORATION, Tokyo 141 (JP)
(72) Inventor: Murasugi, Hiroshi c/o Sony Corporation, Tokyo 141 (JP)
(74) Representative: Mills, Julia

(57) **Abstract**

A projector unit is disclosed wherein a replacing operation of a light source is simplified and the quality of an image can be assured advantageously. A locking mechanism is formed from engaging pins, engaging pawls and a spring. The engaging pins are provided on a housing portion of a body section. The engaging pawls are each supported at a bearing portion intermediate in an extending direction thereof for rocking motion on a light source section housing by a pivot. The engaging pawls have engaging grooves provided thereon for engaging with the engaging pins in a state wherein mating portions of the light source section housing and the body section housing are mated with each other. The spring extends between a rear face of an intermediate divisional member of the light source section housing and a connecting piece of the engaging pawl.

## Description

The present invention contains subject matter related to Japanese Patent Application JP 2005-181081 filed in the Japanese Patent Office on June 21, 2005.

This invention relates to the field of projector units and projection television apparatus which use projector units.

A projection television apparatus, that is, a rear projection television apparatus, is available wherein a flux of light is projected to the rear face of a screen of the rear projection type to form an image on the screen.

Such a projection television apparatus as just described includes a projector unit which in turn includes a light source section including a light source and a body section for producing an image projection light flux from the light flux emitted from the light source section and emitting the produced image projection light flux.

The body section includes, for example, an illumination optical section, a demultiplexing section, an image formation section, and a projection section. The illumination optical section converts the light flux emitted from the light source section into parallel light. The demultiplexing section demultiplexes the parallel light from the illumination optical section into a plurality of light fluxes of different wavelengths from each other. The image formation section modulates the light fluxes from the demultiplexing section with image information and multiplexes the modulated light fluxes to produce an image projection light flux. The projection section projects the image projection light flux to the screen.

Incidentally, since the light source of the light source section such as, for example, a high pressure lamp has a service life, the light source section is frequently configured so as to be removably mounted on a housing section which forms a body section.

For example, where the light source section includes a high pressure lamp and a light source section housing for holding the high pressure lamp, a plurality of screws fitted in the light source section housing are screwed into the housing section of the body section side to removably mount the light source section on the body section. An apparatus of the type just described is disclosed in Japanese Patent Laid-Open No. 2001-209120.

However, according to the conventional apparatus described above, if it is intended to replace the light source section, then screwing operation of the screws into and out of the housing section of the body section side is performed in a narrow space in a frame. Therefore, the replacing operation is cumbersome and takes much time and labor.

Further, after the light source section is adjusted in position with respect to the body section, it is necessary to tighten the screws with certainty. However, if the screws are somewhat loose, then the optical axis of the light source section and the optical axis of the illuminating optical section are brought out of alignment with each other. This results in a failure that the quality of an image projected on the screen is deteriorated.

In an embodiment of the present invention, it is desirable to provide a projector unit and a projection television apparatus wherein a replacing operation of a light source is simplified and besides the quality of an image can be assured advantageously.

Various respective aspects and features of the invention are defined in the appended claims. Features from the dependent claims may be combined with features of the independent claims as appropriate and not merely as explicitly set out in the claims.

In order to attain the desire described above, according to an embodiment of the present invention, there is provided a projector unit having a light source section, a body section for producing an image projection light flux from a light flux emitted from the light source section and emitting the produced image projection light flux, the light source section including a light source section housing provided separately from a body section housing which forms the body section, the light source section housing and the body section housing being coupled to each other with mating portions thereof mated with each other, a locking mechanism for establishing a locked state wherein the mating portions of the light source section housing and the body section housing are mated with each other when the mating portion of the light source section housing is moved toward the mating portion of the body section housing and keeping the locked state, and an unlocking operation section for canceling the locked state.

According to another embodiment of the present invention, there is provided a projection television apparatus having a projector unit for emitting an image projection light flux therefrom, a screen, and a reflecting member having a reflecting face for reflecting the image projection light flux toward a rear face of the screen, the project unit including a light source section including a light source, and a body section for producing an image projection light flux from a light flux emitted from the light source section and emitting the produced image projection light flux, the light source section including a light source section housing for supporting the light source, the light source section housing being removably mounted on a body section housing which forms the body section, the projector unit further including a locking mechanism for establishing a locked state wherein the mating portions of the light source section housing and the body section housing are mated with each other when the mating portion of the light source section housing is moved toward the mating portion of the body section housing and keeping the state in which the mating portions are mated with each other, the projector unit further including an unlocking operation section for canceling the locked state.

In the projector unit and the projection television apparatus, if the mating portion of the light source section housing is pushed into the mating portion of the body section housing, then the locked state wherein the mating portion of the light source section housing and the mating portion of the body section housing are held in a state wherein they are positioned and mated with each other is established automatically by the locking mechanism.

Further, the light source section can be replaced simply by operating the unlocking operation section.

Accordingly, replacement of the light source section can be performed simply, and this is advantageous in enhancement of the convenience in use of the projector unit and the projection television apparatus.

Further, since the locked state wherein the mating portion of the light source section housing and the mating portion of the body section housing are positioned and mated with each other is established automatically by the locking mechanism, the quality of an image to be projected on the screen can be maintained advantageously.

The invention will now be described by way of example with reference to the accompanying drawings, throughout which like parts are referred to by like references, and in which:
FIGS. 1A and 1B are a front elevational view and a side elevational view, respectively, of a projection television apparatus in which a projector unit to which an embodiment of the present invention is applied is incorporated;
FIG. 2 is a fragmentary perspective view of the projection television apparatus shown in FIGS. 1A and 1B;
FIG. 3 is a block diagram showing a configuration of an electric section of the projection television apparatus shown in FIGS. 1A and 1B;
FIG. 4 is a schematic sectional view showing a configuration of an optical system of the projector unit shown in FIGS. 1A and 1B;
FIG. 5 is a schematic perspective view of the projector unit shown in FIGS. 1A and 1B;
FIG. 6 is a plan view of the projector unit of FIG. 5;
FIG. 7 is a front elevational view of the projector unit of FIG. 5;
FIG. 8 is a perspective view of a light source section shown in FIG. 5;
FIG. 9 is a perspective view of the light source section of FIG. 8 but as viewed in a different direction;
FIG. 10 is a front elevational view of the light source section of FIG. 8;
FIG. 11 is a perspective view of a front divisional member of the light source section of FIG. 8;
FIG. 12 is a perspective view of an intermediate divisional member of the light source section of FIG. 8;
FIG. 13 is a perspective view of a rear divisional member of the light source section of FIG. 8;
FIG. 14 is a perspective view showing a housing portion of a body section shown in FIG. 5;
FIG. 15 is a perspective view of an engaging pawl shown in FIG. 5;
FIG. 16 is a perspective view of an unlocking operation member shown in FIG. 1A and 1B; and
FIGS. 17 to 20 are schematic views illustrating mounting of the light source section on the body section shown in FIG. 5.

In the following, a projector unit and a projection television apparatus to which an embodiment of the present invention is applied are described in detail with reference to the accompanying drawings.

First, a configuration of the projection television apparatus is described.

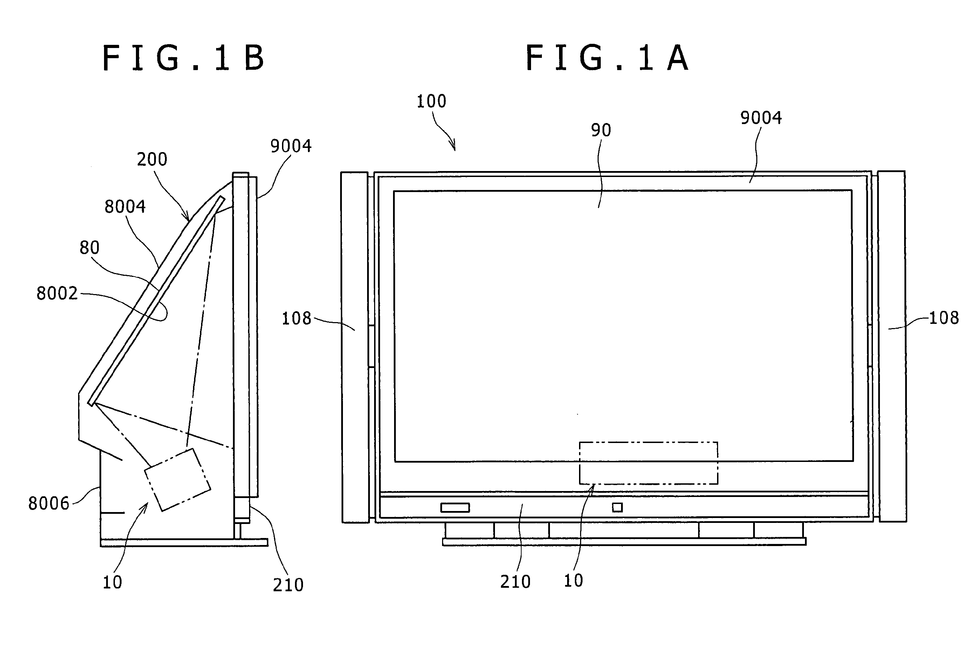

Referring to FIGS. 1A and 1B, the projection television apparatus 100 shown includes a frame 200 which in turn includes a projector unit 10, a reflecting mirror 80, and a screen 90 of the rear projection type.

The projector unit 10 emits an image projection light flux.

The reflecting mirror 80 has a reflecting face 8002 and is disposed above the projector unit 10 rearwardly of the screen 90 of the rear projection type such that the reflecting face 8002 thereof reflects the image projection light flux emitted from the projector unit 10 toward the rear face of the screen 90.

The screen 90 displays a television image on the front face thereof when the image projection light flux reflected by the reflecting mirror 80 is projected to the rear face thereof.

The screen 90 is formed, for example, from a Fresnel lens disposed on the projection image source side and a lenticular screen disposed rearwardly of the Fresnel lens. However, the screen 90 may further include an additional screen in order to reduce the deterioration in contrast by external light and protect the lenticular screen.

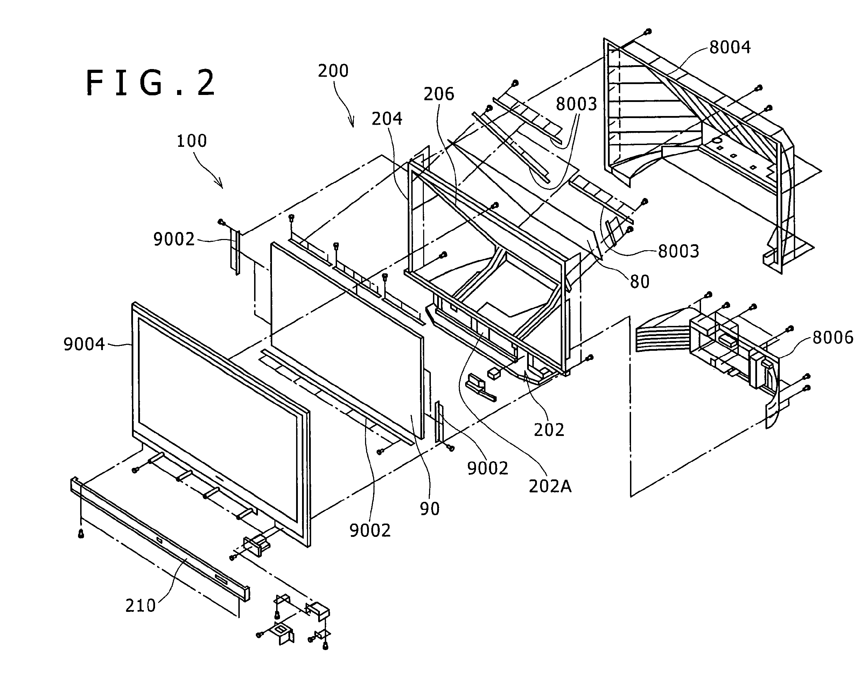

Referring now to FIG. 2, the frame 200 includes a bottom cabinet 202 for holding the projector unit 10 thereon and a screen mounting section 204 in the form of a rectangular framework provided on the bottom cabinet 202. The frame 200 further includes a reflecting mirror mounting section 206 of a reversed trapezoidal shape provided above the bottom cabinet 202 rearwardly of the screen mounting section 204.

The screen 90 is attached to the screen mounting section 204 through upper, lower, left and right mounting members 9002 and screws. Further, a decorative laminate 9004 in the form of a framework is mounted on the screen mounting section 204 such that it covers locations around the mounting members 9002 and the screen 90.

A front face portion 202A of the bottom cabinet 202 is positioned at a front face portion of the frame 200 below the screen mounting section 204, and a decorative laminate 210 is attached to a lower portion of the decorative laminate 9004 in the form of a framework such that it covers the front face portion 202A.

The reflecting mirror 80 is attached to the reflecting mirror mounting section 206 through upper, lower, left and right mounting members 8003 and screws, and a rear upper cover 8004 is attached to the frame 200 such that it covers the mounting members 8003 and the reflecting mirror 80.

The projector unit 10 is disposed rearwardly of the front face portion 202A of the bottom cabinet 202, and a rear lower cover 8006 is attached to the frame 200 such that it covers the projector unit 10 and so forth.

It is to be noted that, in FIG. 1A, a pair of speakers 108 are disposed on the left and right sides of the screen 90.

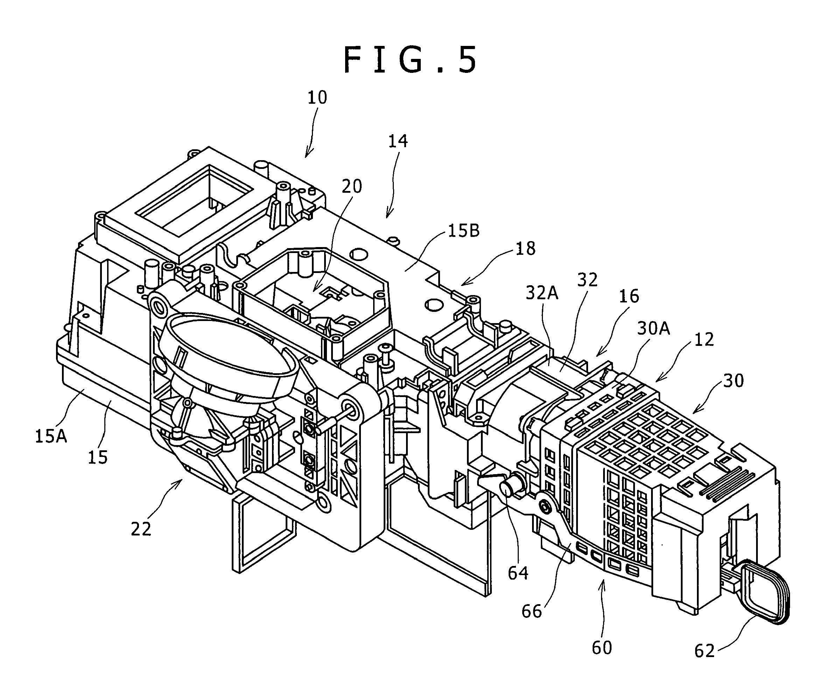

Referring now to FIGS. 5 to 7, the projector unit 10 includes a light source section 12 including a light source, and a body section 14 for producing an image projection light flux from a light flux emitted from the light source section 12 and emitting the produced image projection light flux. The projector unit 10 further includes a duct 15 for cooling the body section 14. The duct 15 includes a lower duct 15A and an upper duct 15B and circulates cooling wind into an image formation section 20 hereinafter described to cool the image formation section 20.

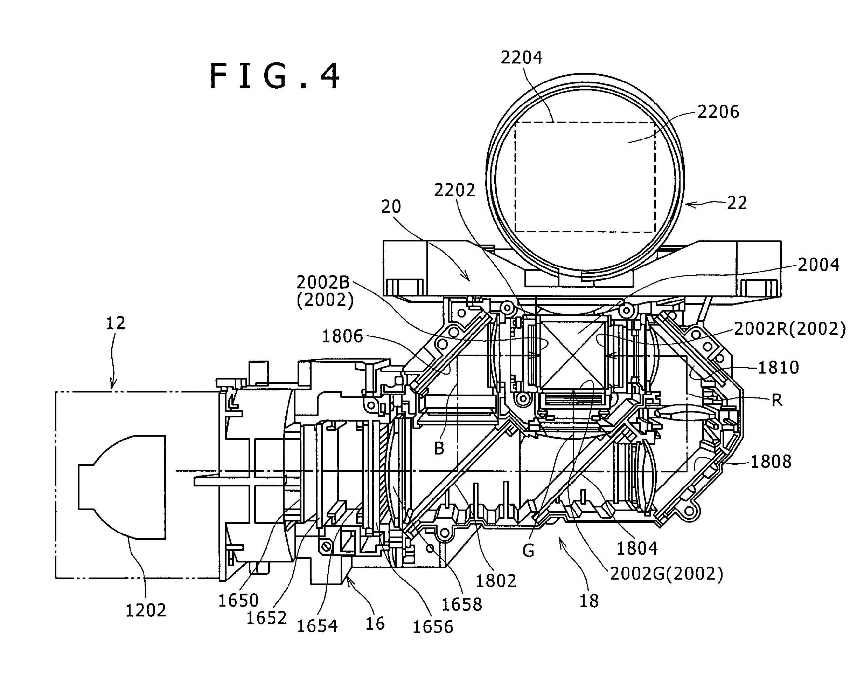

Referring particularly to FIG. 4, the body section 14 includes an illuminating optical section 16 for converting a light flux emitted from the light source section 12 into parallel light. The body section 14 further includes a demultiplexing section 18 for demultiplexing the parallel light from the illuminating optical section 16 into a plurality of light fluxes having wavelengths different from each other. The body section 14 further includes an image formation section 20 for modulating the light fluxes produced by the demultiplexing section 18 and multiplexing the modulated light fluxes to produce an image projection light flux. The body section 14 further includes and a projection section 22 for projecting the image projection light flux to the screen 90.

The light source section 12 includes a light source 1202 which may be an ultrahigh pressure lamp for emitting white light.

The illuminating optical section 16 includes a UV-IR cut filter 1650, a first fly-eye lens 1652, a second fly-eye lens 1654, a PS converter 1656 and a condenser lens 1658 disposed along a linear line in front of the light source 1202. The illuminating optical section 16 is configured such that white light from the light source 1202 passes through the components thereof and enters as parallel light into the demultiplexing section 18.

The demultiplexing section 18 demultiplexes the light flux in the form of white light introduced thereto from the illuminating optical section 16 into three light fluxes of different colors of red (R), green (G) and blue (B).

In an embodiment of the present embodiment, the demultiplexing section 18 is formed from first and second dichroic mirrors 1802 and 1804 and first to third mirrors 1806, 1808 and 1810.

The first dichroic mirror 1802 transmits therethrough the light fluxes of red (R) and green (G) from among the light fluxes introduced thereto from the illuminating optical section 16 but reflects the light flux of blue (B).

The second dichroic mirror 1804 transmits therethrough the light flux of red (R) from between the fluxes of red (R) and green (G) which have transmitted through the first dichroic mirror 1802 but reflects the light flux of green (G).

Accordingly, a light flux introduced to the first dichroic mirror 1802 from the illuminating optical section 16 is demultiplexed into two light fluxes including a light flux of blue (B) and another light flux of red (R) and green (G) by the first dichroic mirror 1802.

The light flux of blue (B) demultiplexed by the first dichroic mirror 1802 is reflected by the first mirror 1806.

From within the light flux of red (R) and green (G) demultiplexed by the first dichroic mirror 1802, a light flux of green (G) is reflected by the second dichroic mirror 1804.

On the other hand, from within the light flux of red (R) and green (G) demultiplexed by the first dichroic mirror 1802, a light flux of red (R) passes through the second dichroic mirror 1804 and comes through the second mirror 1808 to the third mirror 1810, by which it is reflected.

The light fluxes of red (R), green (G) and blue (B) demultiplexed by the demultiplexing section 18 in this manner are emitted from the demultiplexing section 18 toward the image formation section 20.

The image formation section 20 includes three liquid crystal display apparatus or liquid crystal panels 2002 (2002R, 2002G and 2002B) of the transmission type for displaying image information of the three colors of red (R), green (G) and blue (B). The image formation section 20 further includes a cross dichroic prism 2004 for multiplexing the light fluxes having transmitted through the liquid crystal display apparatus 2002 and modulated with image information of the three colors to produce one image projection light flux.

The three liquid crystal display apparatus 2002R, 2002G and 2002B and the cross dichroic prism 2004 are coupled integrally with one another.

The three liquid crystal display apparatus 2002R, 2002G and 2002B individually have a display face on which an image is to be displayed, and image signals (driving signals) and a power supply for displaying the images on the display screens are supplied to the liquid crystal display apparatus 2002R, 2002G and 2002B.

The light flux of blue (B) emitted from the demultiplexing section 18 toward the image formation section 20 is irradiated upon the liquid crystal display apparatus 2002B of blue and passes through the liquid crystal display apparatus 2002B, whereupon it is modulated with the image information. Then, the modulated light flux of blue (B) is introduced to the cross dichroic prism 2004.

The light flux of green (B) emitted from the demultiplexing section 18 toward the image formation section 20 is irradiated upon the liquid crystal display apparatus 2002G of green and passes through the liquid crystal display apparatus 2002G, whereupon it is modulated with the image information. Then, the modulated light flux of green (G) is introduced to the cross dichroic prism 2004.

The light flux of red (R) emitted from the demultiplexing section 18 toward the image formation section 20 is irradiated upon the liquid crystal display apparatus 2002R of red and passes through the liquid crystal display apparatus 2002R, whereupon it is modulated with the image information. Then, the modulated light flux of red (R) is introduced to the cross dichroic prism 2004.

The light fluxes of the three colors introduced to the cross dichroic prism 2004 are multiplexed by the cross dichroic prism 2004 into a single image projection light flux, which is emitted to the projection section 22.

The projection section 22 includes an incidence lens 2202, a reflecting mirror 2204, and a projection lens 2206.

The incidence lens 2202 accepts the image projection light flux introduced thereto from the cross dichroic prism 2004 of the image formation section 20.

The reflecting mirror 2204 is disposed such that the reflecting face thereof is inclined upwardly with respect to the optical axis of the incidence lens 2202.

The projection lens 2206 is disposed above the reflecting mirror 2204 such that the optical axis thereof is inclined with respect to the reflecting face of the reflecting mirror 2204.

Accordingly, the image projection light flux introduced to the projection section 22 from the cross dichroic prism 2004 is deflected upwardly by the reflecting mirror 2204 through the incidence lens 2202 and irradiated upon the reflecting mirror 80 through the projection lens 2206 as seen in FIG. 1B. Then, the image projection light flux is projected to the rear face of the screen 90 by the reflecting mirror 80 to form an image on the rear face of the screen 90. Consequently, a color image is formed on the front face of the screen 90.

Now, an electric section of the projection television apparatus 100 is described.

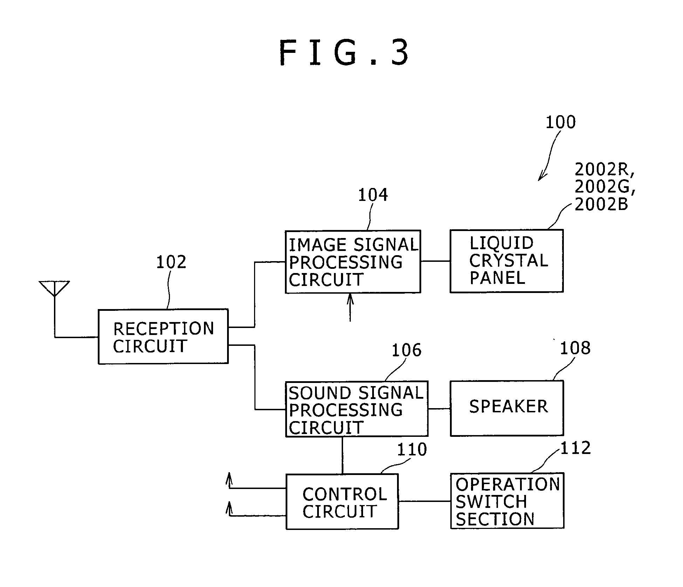

Referring to FIG. 3, the projection television apparatus 100 includes a reception circuit 102, an image signal processing circuit 104, a sound signal processing circuit 106, a speaker 108, a control circuit 110, and an operation switch section 112. The projection television apparatus 100 further includes the liquid crystal display apparatus 2002R, 2002G and 2002B described hereinabove.

The reception circuit 102 performs channel selection in accordance with an instruction from the control circuit 110 and demodulates a television signal received from an antenna to demultiplex the television signal into an image signal and a sound signal. The reception circuit 102 outputs the image signal and the sound signal.

The image signal processing circuit 104 performs necessary signal processes for the image signal to produce image information of the three colors of red (R), green (G) and blue (B) and supplies image signals (driving signals) corresponding to the image information to the liquid crystal display apparatus 2002R, 2002G and 2002B, respectively.

The sound signal processing circuit 106 performs necessary signal processes including an amplification process for the sound signal to produce an audio signal and supplies the audio signal to the speaker 108. Consequently, sound is generated from the speaker 108.

The operation switch section 112 is provided to perform various operations and settings relating to reception of a broadcast by the projection television apparatus 100. The operation switch section 112 includes various switches such as, for example, a channel selection switch, a sound volume adjustment switch, and an input changeover switch.

The control circuit 110 controls the reception circuit 102, image signal processing circuit 104 and sound signal processing circuit 106 in accordance with an operation of the operation switch section 112.

Further, though not shown, the projection television apparatus 100 includes external input terminals for receiving an image signal and a sound signal supplied thereto from an external apparatus such as a DVD player or a video deck. The projection television apparatus 100 further includes an input changeover circuit for switchably inputting the image signal and the sound signal supplied to the external input terminals to the image signal processing circuit 104 and the sound signal processing circuit 106, respectively.

The image signal and the sound signal supplied to the external input terminals by an operation of the operation switch section 112 are supplied to the image signal processing circuit 104 and the sound signal processing circuit 106, respectively, through the input changeover circuit.

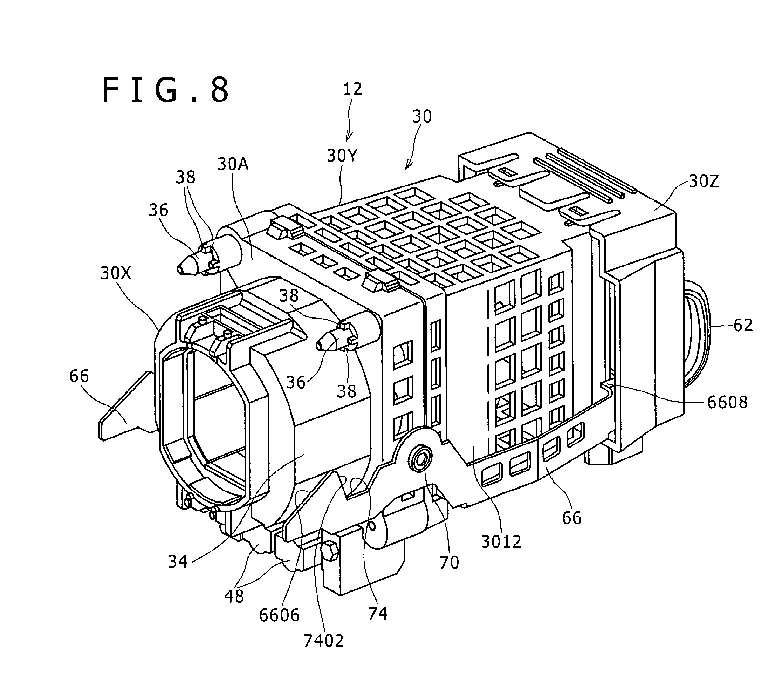

Referring now to FIGS. 8 to 10, the light source section 12 includes a light source section housing 30 having a cross section in the form of a rectangular framework for supporting the light source 1202.

The light source 1202 is held on the light source section housing 30 such that a light flux thereof is irradiated toward a mating portion 30A. Also a concave lens for converting the light flux into parallel light is held on the light source section housing 30 so as to be opposed forwardly of the light source 1202.

Referring to FIGS. 5 to 7, the light source section housing 30 is removably mounted on a body section housing which form the body section 14, or more particularly on a housing portion 32 which forms the body section 14.

The light source section housing 30 has a mating portion 30A which is removably coupled to a mating portion 32A of the housing portion 32.

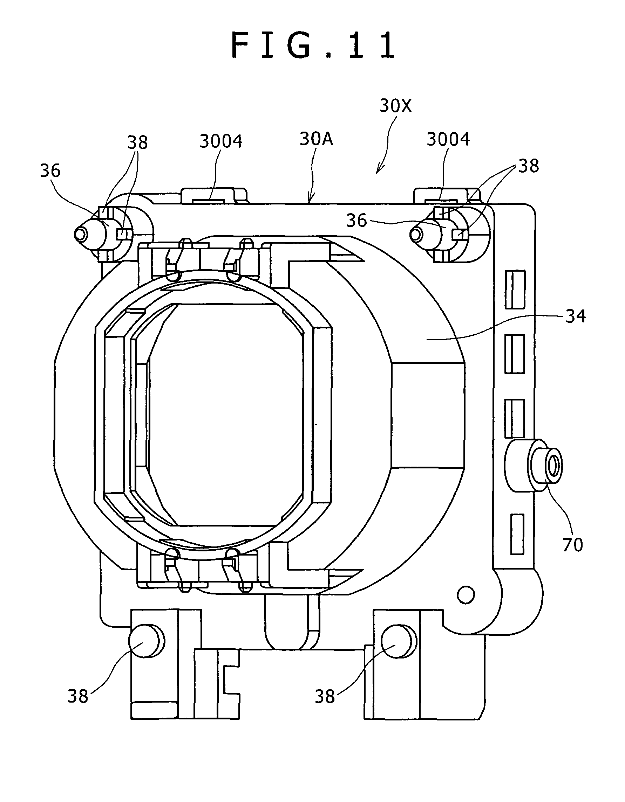

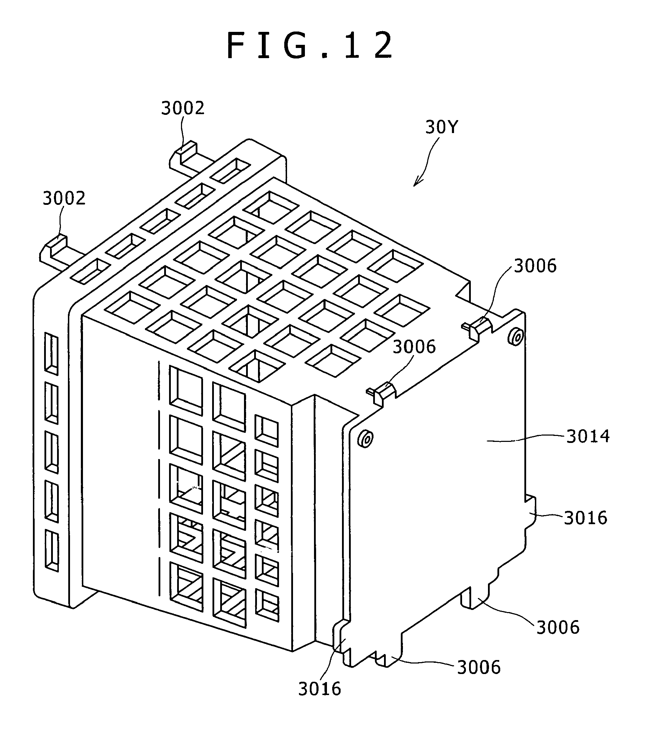

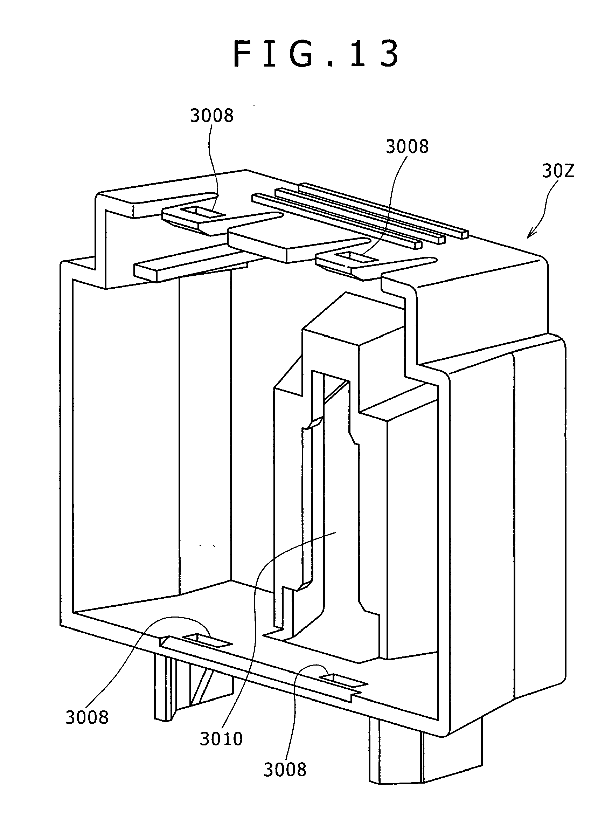

More particularly, the light source section housing 30 is formed from three members including a front divisional member 30X shown in FIG. 11, an intermediate divisional member 30Y shown in FIG. 12, and a rear divisional member 30Z shown in FIG. 13.

The front divisional member 30X is coupled to a front portion of the intermediate divisional member 30Y through engagement between a pawl 3002 and a groove 3004 or the like, and the rear divisional member 30Z is coupled to a rear portion of the intermediate divisional member 30Y through engagement between a pawl 3006 and a groove 3008 or the like.

The intermediate divisional member 30Y is formed so as to have a cross section of a rectangular framework shape and has a large number of rectangular windows formed like gratings on four side faces thereof so that the light source 1202 can be cooled efficiently.

More particularly, the light source section housing 30 has a mating portion 30A to be removably coupled to the mating portion 32A of the housing portion 32.

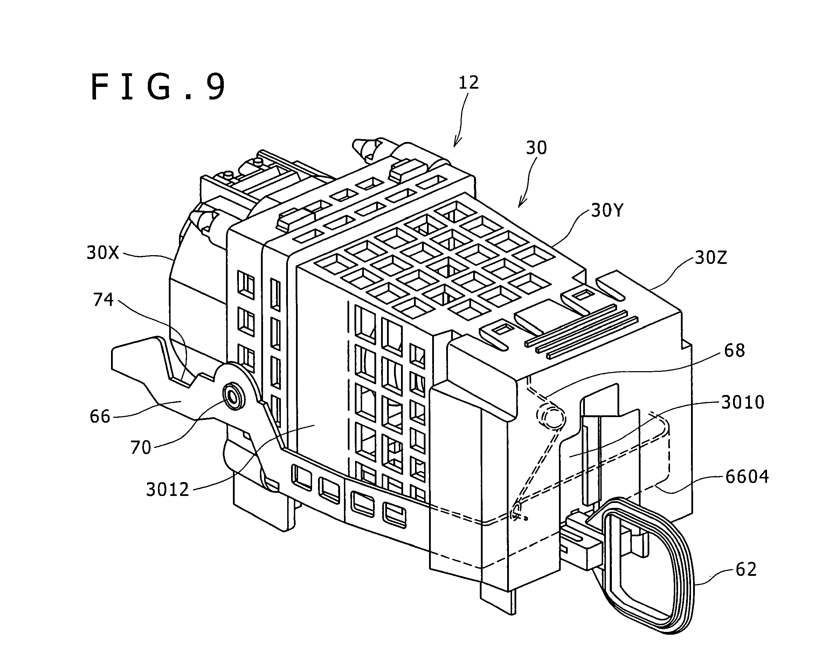

The light source section housing 30 has two sets of side faces 3012 opposing to each other in a direction perpendicular to the optical axis of the light flux of the light source 1202 as seen in FIGS. 8 and 9. Further, a rear face 3014 is provided at a location of the light source section housing 30 which opposes to the mating portion 30A as shown in FIG. 12. The rear face 3014 is covered with the rear divisional member 30Z.

The mating portion 30A of the light source section housing 30 is provided at a front portion of the front divisional member 30X.

Referring to FIGS. 8, 10 and 11, the mating portion 30A includes a guide wall 34 in the form of a framework elongated in the upper and lower directions, a plurality of positioning pins 36 provided around the guide wall 34, and a plurality of positioning faces 38.

In the present embodiment, the positioning pins 36 are provided at left and right positions above the guide wall 34. The positioning faces 38 are provided at four places around the guide wall 34. In particular, two ones of the positioning faces 38 are each provided at an outer peripheral portion of a base portion of the positioning pins 36, and the remaining two positioning faces 38 are provided at left and right locations of a lower portion of the guide wall 34.

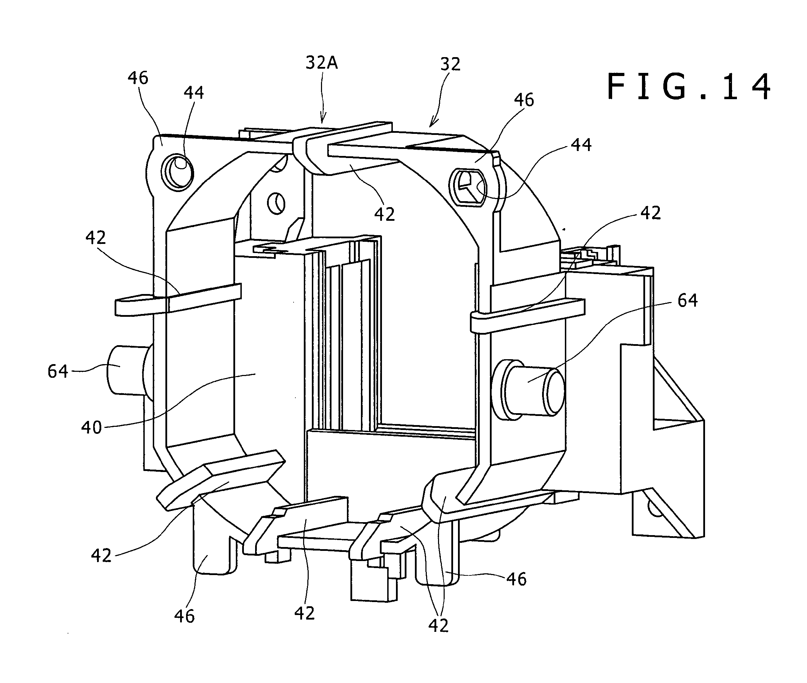

Referring to FIG. 14, a guide hole 40 into which the guide wall 34 is to be inserted, and a plurality of guiding ribs 42 provided at inner peripheral portions of the guide hole 40 for engaging with the guide wall 34 are formed on the mating portion 32A of the housing portion 32. Further, a plurality of positioning holes 44 into which the positioning pins 36 are to be inserted and positioning faces 46 for abutting with the positioning faces 38 are formed on the mating portion 32A of the housing portion 32.

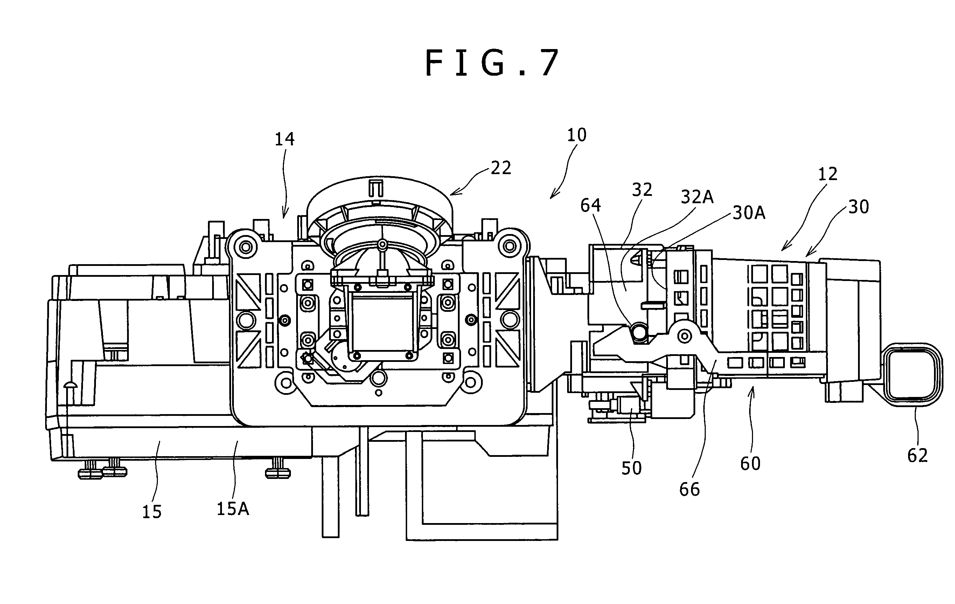

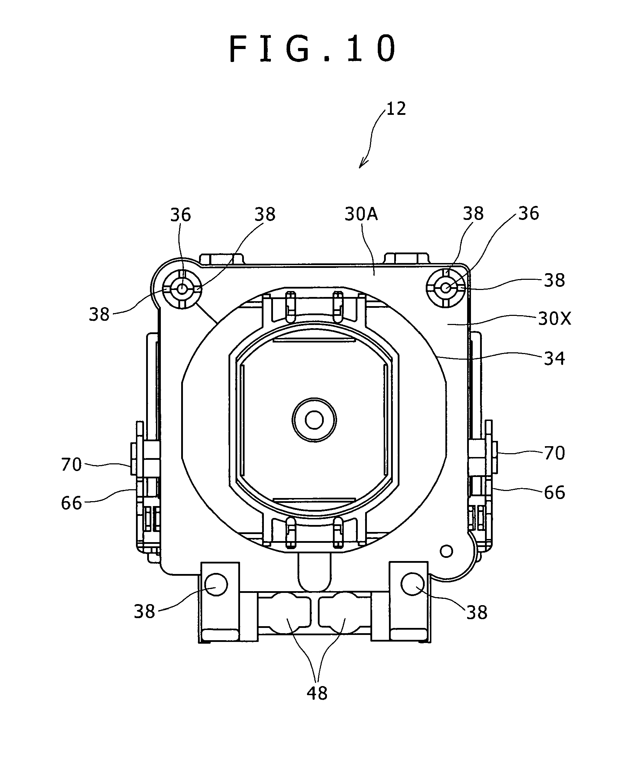

Connectors 48 for supplying power to the light source 1202 are provided at lower portions of the mating portion 30A as seen in FIGS. 8 and 10 while connectors 50 for mating with the connectors 48 are provided on the mating portion 32A of the housing portion 32 as seen in FIG. 7. The connectors 50 are connected to a light source power supply section not shown.

Referring to FIGS. 5 to 7, a locking mechanism 60 is provided for establishing a locked state wherein, when the mating portion 30A of the light source section housing 30 is moved toward the mating portion 32A of the housing portion 32, the mating portions 30A and 32A are mated with each other and for maintaining the locked state. Further, an unlocking operation section 62 for canceling the locked state is provided.

The locking mechanism 60 includes an engaging pin 64 provided on the housing portion 32, and an engaging pawl 66 provided for rocking motion on the light source section housing 30 for engaging with the engaging pin 64. The locking mechanism 60 further includes a spring 68 provided on the light source section housing 30 for biasing the engaging pawl 66 in a rocking direction to a position in which the engaging pawl 66 engages with the engaging pin 64 as seen in FIG. 9.

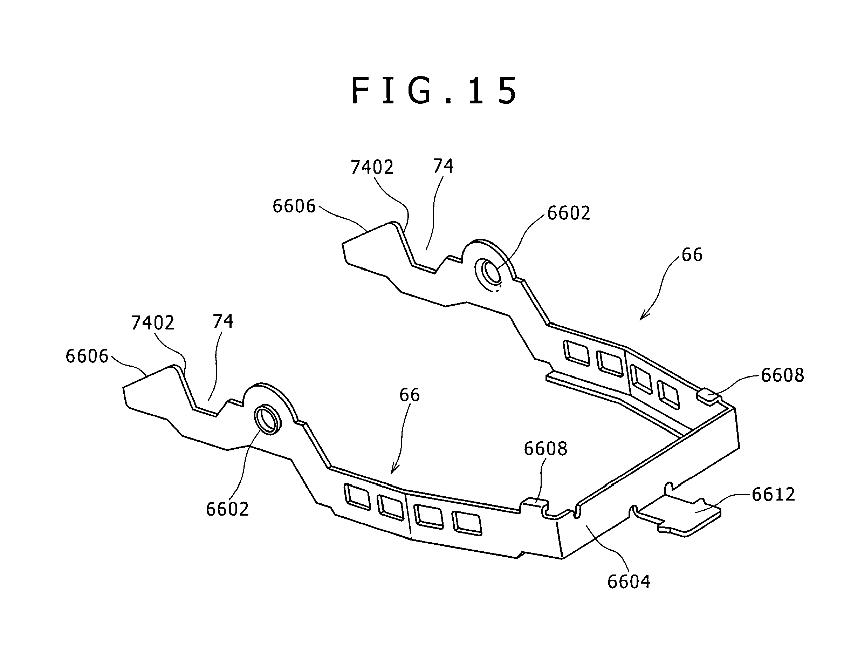

Referring to FIGS. 8 to 10 and also to FIG. 15, the engaging pawl 66 extends in a direction in which the mating portion 30A is mated, and is supported at a bearing portion 6602 thereof for rocking motion on the light source section housing 30 (front divisional member 30X) at an intermediate position of the engaging pawl 66 in the extension direction by a pivot 70.

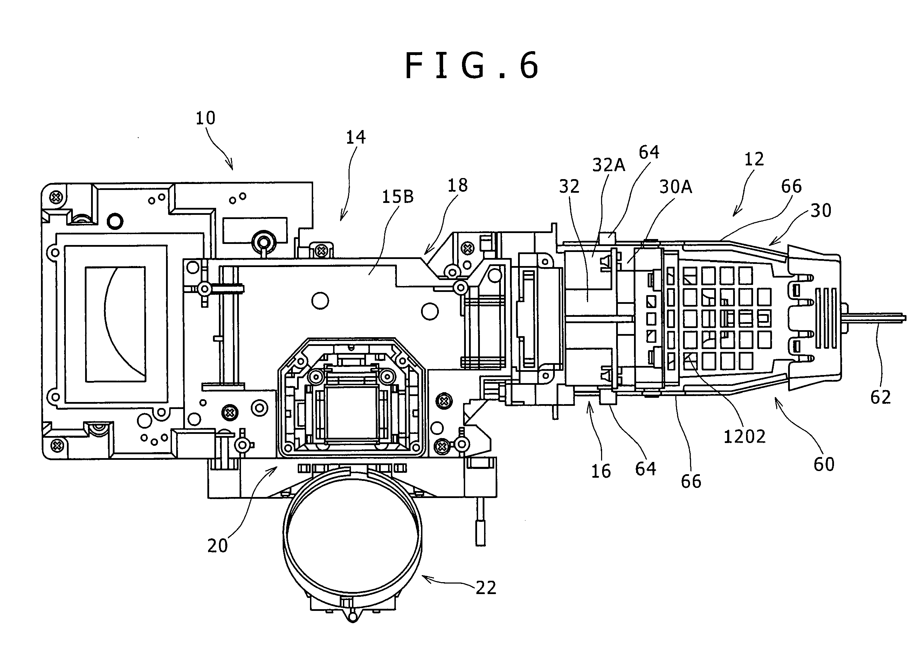

The engaging pawl 66 is provided on each of the two side faces 3012 of the light source section housing 30 which oppose to each other, and two engaging pins 64 are provided on the housing portion 32 in a corresponding relationship to the engaging pawls 66 as seen in FIG. 6.

A plurality of windows are perforated at portions of the engaging pawls 66 sidewardly of the intermediate divisional member 30Y so that the light source 1202 is cooled efficiently.

Referring to FIG. 9, the two engaging pawls 66 are connected to each other by a connecting piece 6604 extending on and along the rear face 3014 so that they are formed as a unitary member.

Referring to FIG. 15, an engaging groove 74 is provided at a location of each of the engaging pawls 66 rather near to one end in the extension direction of the engaging pawls 66. The engaging groove 74 is engageable with the engaging pin 64 when the mating portion 30A of the light source section housing 30 and the mating portion 32A of the housing portion 32 are mated with each other.

The engaging groove 74 has an inclined edge 7402 formed thereon for biasing the engaging pin 64 in a direction in which the engaging pin 64 is attracted toward the light source section housing 30 to maintain a state wherein the positioning faces 38 of the mating portion 30A of the light source section housing 30 and the positioning faces 46 of the mating portion 32A of the housing portion 32 are mated with each other when the engaging pawls 66 biased by the spring 68 are rocked.

An inclined guide portion 6606 is provided at an end of each of the engaging pawls 66 in the extension direction and contacts, when the mating portion 30A of the light source section housing 30 and the mating portion 32A of the housing portion 32 move toward each other, with the corresponding engaging pin 64 to rock the engaging pawls 66 in a direction in which the engaging pins 64 and the engaging groove 74 are engaged with each other.

The engaging pawls 66 are positioned at an initial rocking position as stoppers 6608 (refer to FIG. 15) provided at the base ends thereof abut with wall portions 3016 (refer to FIGS. 8 and 12) of the rear face 3014 of the intermediate divisional member 30Y.

Referring to FIG. 9, the spring 68 is formed from a torsion spring extending between a location of the rear face 3014 of the intermediate divisional member 30Y and the connecting piece 6604.

The spring 68 is provided so as to bias the engaging pawls 66 in a rocking direction in which the engaging grooves 74 engage with the engaging pins 64. Thus, the initial rocking position of the engaging pawls 66 is defined by the spring 68, stoppers 6608 and wall portions 3016.

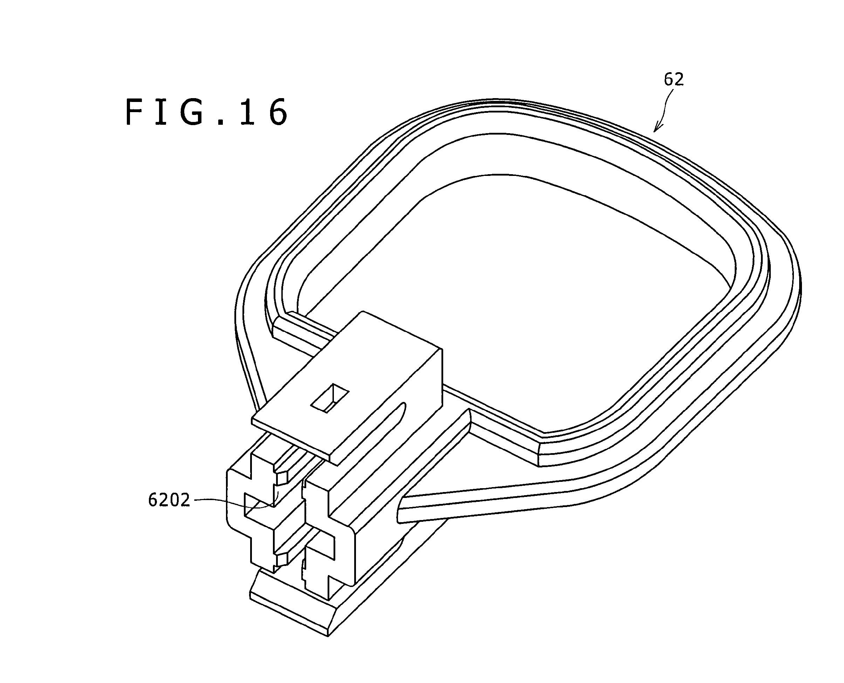

Referring to FIG. 16, the unlocking operation section 62 is formed from a knob connected to a projection 6612 (refer to FIG. 15) of the connecting piece 6604, and has a groove 6202 formed therein such that the projection 6612 is fitted therein.

The unlocking operation section 62 is for canceling the locked state by the locking mechanism 60. In the present embodiment, the unlocking operation section 62 operates the engaging pawls 66 to rock in a direction in which the engaging grooves 74 are disengaged from the engaging pins 64. A groove 3010 which permits the rocking operation of the unlocking operation section 62 is formed on the rear divisional member 30Z as seen in FIGS. 9 and 13.

In the present embodiment, the unlocking operation section 62 is formed as a loop-shaped knob which can be operated by a finger to facilitate an operation for releasing the connectors 48 and 50, positioning pins 36 and so forth and taking out the light source section 12 after the locked state by the locking mechanism 60 is canceled. It is to be noted that the unlocking operation section 62 may otherwise be a T-shaped knob or the like. In short, where the unlocking operation section 62 is configured so that it can be operated with a finger, taking out of the light source section 12 is facilitated advantageously.

Now, operation of the projector unit 10 is described.

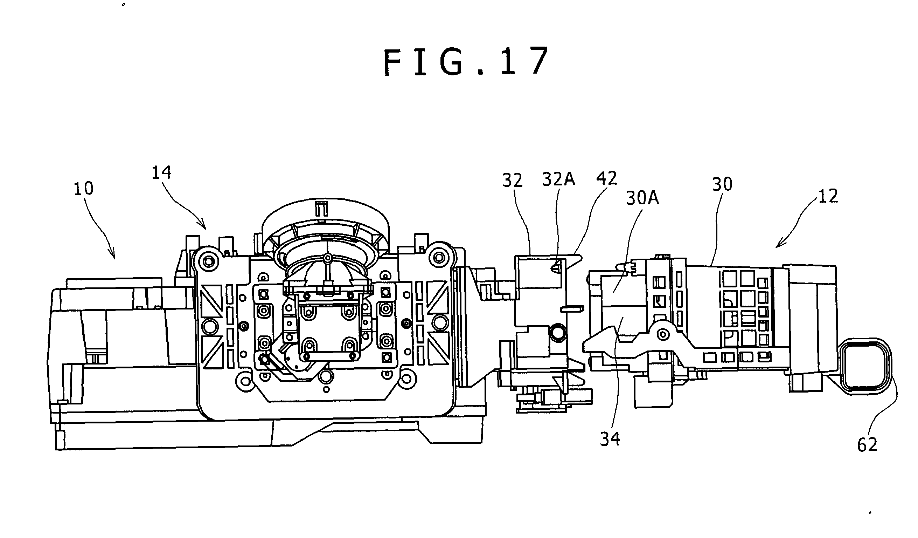

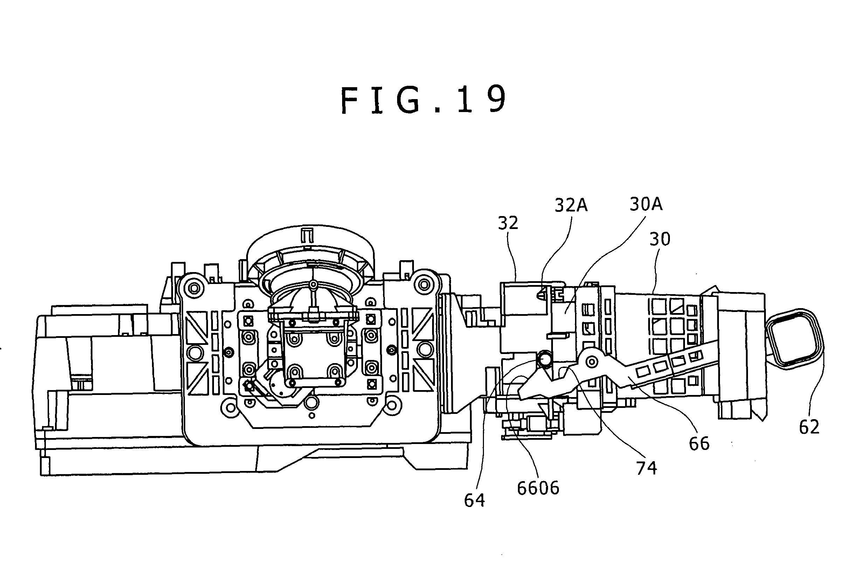

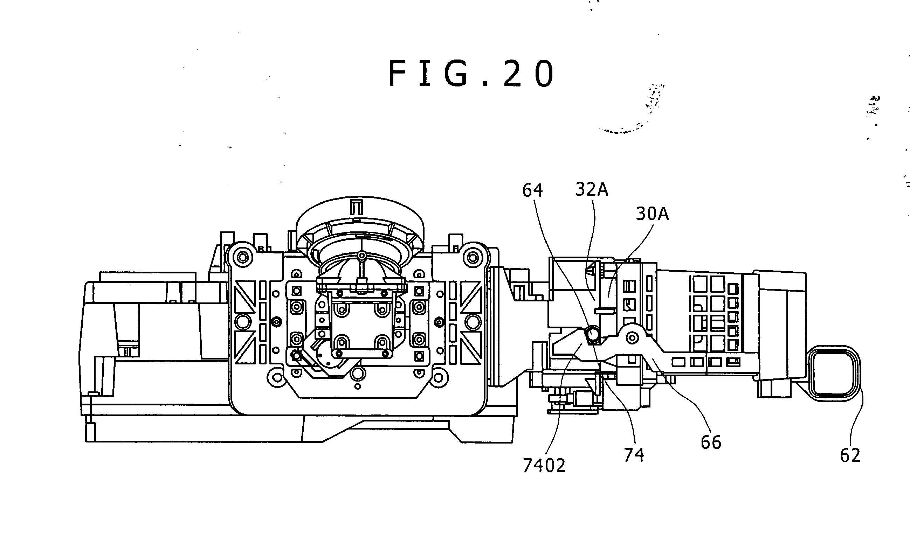

First, mounting of the light source section 12 on the body section 14 is described with reference to FIGS. 17 to 20.

It is to be noted that, upon replacement of the light source 1202, it is replaced together with the light source section 12 shown in FIGS. 8 to 10.

First, the light source section housing 30 is moved with the mating portion 30A thereof directed toward the mating portion 32A of the housing portion 32 so that the mating portion 30A thereof approaches the mating portion 32A of the housing portion 32 as seen in FIG. 17.

As the mating portions 30A and 32A approach each other, the guide wall 34 is guided by the guiding ribs 42 first so that the guide wall 34 is inserted smoothly into the guide hole 40.

As the guide wall 34 is inserted into the guide hole 40 further, the positioning pins 36 are inserted into the positioning holes 44, and thereafter, the positioning faces 38 of the light source section housing 30 are mated with the positioning faces 46 of the housing portion 32. As a result, the optical axis of the light source section 12 and the optical axis of the illuminating optical section 16 are aligned with each other.

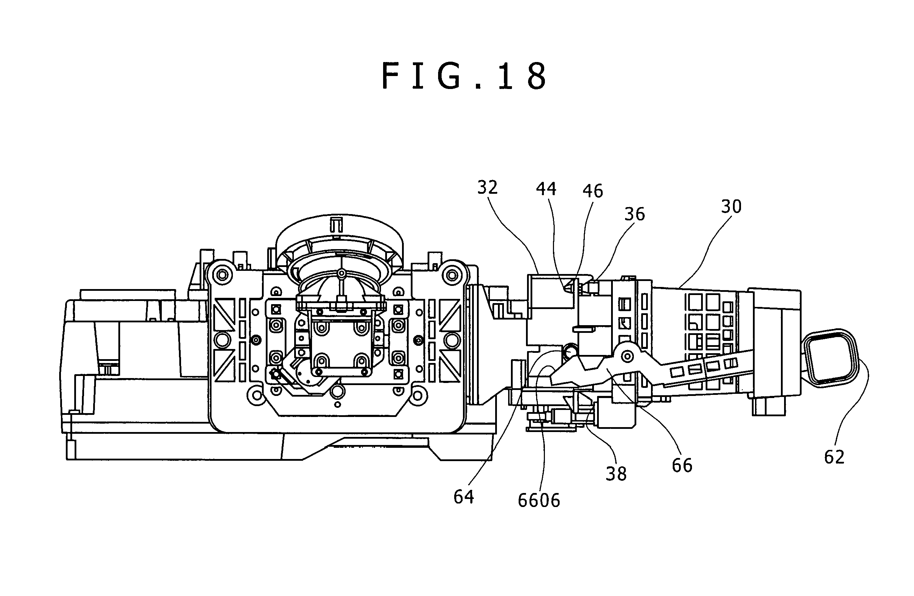

Meanwhile, after the guiding ribs 42 are brought into contact with the guide wall 34, the inclined guide portions 6606 of the engaging pawls 66 positioned at their initial rocking position are engaged with the engaging pins 64 as seen in FIG. 18. Then, as the mating portions 30A and 32A further approach each other, the engaging pawls 66 are rocked in a direction in which the engaging grooves 74 are engaged with the engaging pins 64 against the biasing force of the spring 68.

Then, as the mating portions 30A and 32A further approach each other until the positioning holes 38 and 46 come close to each other, then the engaging pins 64 are engaged with the engaging grooves 74.

More particularly, as the positioning holes 38 and 46 approach each other, the inclined edges 7402 which form the engaging grooves 74 and the engaging pins 64 are engaged with each other. Since the engaging pawls 66 are normally biased by the spring 68, the engaging pins 64 are attracted to the light source section housing 30 by the inclined edges 7402. In other words, the light source section housing 30 is attracted toward the housing portion 32 thereby to bias the light source section housing 30 in which the mating portion 30A of the light source section housing 30 and the mating portion 32A of the housing portion 32 are mated with each other and the thus mated state is maintained.

In other words, a locked state wherein the mating portion 30A and the light source section housing 30 and the mating portion 32A of the housing portion 32 are held in a mutually positioned mated state is established. It is to be noted that the connectors 48 and 50 start their coupling after the positioning pins 36 begin to be guided by the positioning holes 44, and the coupling is completed to establish electric connection between the connectors 48 and 50 at a point of time at which the locked state is established.

Now, removal of the light source section 12 from the body section 14 is described.

The unlocking operation section 62 is operated upwardly with a finger to rock the engaging pawls 66 in the direction in which the engaging grooves 74 are disengaged from the engaging pins 64, and is drawn out to remove the light source section housing 30 from the housing portion 32. At this time, also the connectors 48 and 50 are disconnected from each other.

Then, the light source section 12 is removed.

With the projector unit 10 of the present embodiment, when the light source section 12 is to be mounted, the mating portion 30A of the light source section housing 30 is directed to the mating portion 32A of the housing portion 32, and the mating portion 30A of the light source section housing 30 is pushed in toward the mating portion 32A of the light source section housing 30. Thereupon, the locked state wherein the mating portion 30A of the light source section housing 30 and the mating portion 32A of the housing portion 32 are positioned and mated with each other is established automatically.

On the other hand, when the light source section 12 is to be removed, if the unlocking operation section 62 is pushed up and the light source section housing 30 is drawn away from the housing portion 32, then the light source section 12 can be removed simply.

Particularly, in the projector unit 10 of the present embodiment, since the unlocking operation section 62 is formed as a loop-shaped knob which can be operated with a finger, the light source section 12 can be removed simply.

Accordingly, such an operation of tightening or loosening a plurality of screws in a small space in the frame 200 as in the convention apparatus is eliminated, and replacement of the light source section 12 can be performed simply. This is advantageous in order to enhance the convenience in use of the projection television apparatus 100.

Further, the conventional apparatus described hereinabove is disadvantageous in that, where a screw is somewhat loosened, the optical axis of the light source section 12 and the optical axis of the illuminating optical section 16 are brought out of alignment with each other. However, in the apparatus of the present embodiment, since the locked state is established by engagement between the engaging pins 64 and the engaging grooves 74, such a disadvantage as described above is eliminated. This is advantageous in order to maintain the quality of an image to be projected on a screen.

It is to be noted that, while the projector unit 10 in the embodiment uses the liquid crystal display apparatus 2002 of the transmission type as the image formation section 20, alternatively a liquid crystal display apparatus of the reflection type may be used for the image formation section 20.

Further, the image formation section 20 is not limited to those which uses a liquid crystal display apparatus but may alternatively adopt any of various conventionally known image formation sections.

Further, the projector unit 10 is not restrictively adopted by a projector television apparatus but may be adopted by various apparatus such as a projector for business use and a projector for hall/theater use.

Furthermore, while various conventionally known structures can be adopted for the configuration of the locking mechanism or the unlocking section, use of an engaging pin and an engaging pawl as in the projector unit 10 of the present embodiment is advantageous in simplification in structure and reduction in cost.

While a preferred embodiment of the present invention has been described using specific terms, such description is for illustrative purposes, and it is to be understood that changes and variations may be made without departing from the scope of the following claims.

## Claims

1. A projector unit, comprising:
a light source section;
a body section for producing an image projection light flux from a light flux emitted from said light source section and emitting the produced image projection light flux;
said light source section including a light source section housing provided separately from a body section housing which forms said body section;
said light source section housing and said body section housing being coupled to each other with mating portions thereof mated with each other;
a locking mechanism for establishing a locked state
wherein said mating portions of said light source section housing and said body section housing are mated with each other when said mating portion of said light source section housing is moved toward said mating portion of said body section housing and keeping the locked state; and
an unlocking operation section for canceling the locked state.

2. The projector unit according to claim 1,
wherein said locking mechanism includes
an engaging pin provided on a first one of said light source section housing and said body section housing,
an engaging pawl provided for rocking motion on a second one of said light source section housing and said body section housing for engaging with said engaging pin, and
a spring provided on the second one of said light source section housing and said body section housing for biasing said engaging pawl in a rocking direction to a position at which said engaging pawl engages with said engaging pin.

3. The projector unit according to claim 1,
wherein said locking mechanism includes
an engaging pin provided on said body section housing,
an engaging pawl provided for rocking motion on said light source section housing for engaging with said engaging pin, and
a spring provided on said light source section housing for biasing said engaging pawl in a rocking direction to a position at which said engaging pawl engages with said engaging pin.

4. The projector unit according to claim 3,
wherein
said light source section housing has two side faces opposing to each other in a direction perpendicular to an optical axis of the light flux emitted from said light source section, and
said engaging pawl is provided on each of the two side faces of said light source section housing while two such engaging pins are provided on said body section housing in a corresponding relationship to the engaging pawls.

5. The projector unit according to claim 3,
wherein
said light source section housing includes
a rear face positioned in an opposing relationship to said mating portion thereof and
two side faces opposing to each other in a direction perpendicular to the optical axis of the light flux emitted from said light source section, and
said engaging pawl is provided on each of the two side faces of said light source section housing in such a manner as to extend in a direction in which said mating portions are mated with each other and be supported at an intermediate portion thereof in the extending direction for rocking motion on the side face,
each of the engaging pawls having an engaging groove provided at a portion thereof rather near to one end in the extending direction thereof for engaging with the corresponding engaging pin when said mating portion of said light source section housing and said mating portion of said body section housing are mated with each other,
the two engaging pawls extending on the rear face side of said light source section housing until the engaging pawls are coupled to each other by a connecting piece extending on said rear face.

6. The projector unit according to claim 3,
wherein
said light source section housing includes
a rear face positioned in an opposing relationship to said mating portion thereof and
two side faces opposing to each other in a direction perpendicular to the optical axis of the light flux emitted from said light source section, and
said engaging pawl is provided on each of the two side faces of said light source section housing in such a manner as to extend in a direction in which said mating portions are mated with each other and be supported at an intermediate portion thereof in the extending direction for rocking motion on the side face,
each of the engaging pawls having an engaging groove provided at a portion thereof rather near to one end in the extending direction thereof for engaging with the corresponding engaging pin when said mating portion of said light source section housing and said mating portion of said body section housing are mated with each other,
the two engaging pawls extending on the rear face side of said light source section housing until the engaging pawls are coupled to each other by a connecting piece extending on said rear face,
said spring extending between the rear face of said light source section housing and said connecting piece.

7. The projector unit according to claim 3,
wherein
said light source section housing includes
a rear face positioned in an opposing relationship to said mating portion thereof and
two side faces opposing to each other in a direction perpendicular to the optical axis of the light flux emitted from said light source section, and
said engaging pawl is provided on each of the two side faces of said light source section housing in such a manner as to extend in a direction in which said mating portions are mated with each other and be supported at an intermediate portion thereof in the extending direction for rocking motion on the side face,
each of the engaging pawls having an engaging groove provided at a portion thereof rather near to one end in the extending direction thereof for engaging with the corresponding engaging pin when said mating portion of said light source section housing and said mating portion of said body section housing are mated with each other,
the two engaging pawls extending on the rear face side of said light source section housing until the engaging pawls are coupled to each other by a connecting piece extending on said rear face,
said spring extending between the rear face of said light source section housing and
said connecting piece, said unlocking operation section being formed from a knob connected to said connecting piece.

8. The projector unit according to claim 7,
wherein
said knob is formed in a loop so as to be operated with a finger.

9. The projector unit according to claim 2,
wherein
said engaging pawl extends in a direction in which said mating portions are mated with each other and is supported at an intermediate portion thereof in the extending direction for rocking motion on the second one of said light source section housing and said body section housing, and
said engaging pawl has a stopper and is biased by said spring so as to be positioned at an initial rocking position at which said stopper abuts with said light source section housing or said body section housing,
said engaging pawl having an engaging groove provided at a portion thereof rather near to one end in the extending direction thereof for engaging with said engaging pin when said mating portion of said light source section housing and said mating portion of said body section housing are mated with each other,
said engaging pawl having an inclined guide portion provided at the one end thereof in the extending direction for contacting, when said mating portion of said light source section housing and said mating portion of said body section housing approach each other, with said engaging pin to rock said engaging pawl from the initial rocking position in a direction in which said engaging pin and said engaging groove engage with each other.

10. The projector unit according to claim 2,
wherein
said engaging pawl extends in a direction in which said mating portions are mated with each other and is supported at an intermediate portion thereof in the extending direction for rocking motion on the second one of said light source section housing and said body section housing, and
said engaging pawl has an engaging groove provided at a portion thereof rather near to one end in the extending direction thereof for engaging with said engaging pin when said mating portion of said light source section housing and said mating portion of said body section housing are mated with each other,
said spring being provided so as to normally bias said engaging pawl in the rocking direction toward a position at which said engaging groove engages with said engaging pin,
said engaging groove having an inclined edge formed thereon for biasing, when said engaging pawl biased by said spring is rocked,
said engaging pin so as to be attracted to the second one of said light source section housing and said body section housing to maintain the state wherein said mating portion of said light source section housing and said mating portion of said body section housing are mated with each other.

11. The projector unit according to claim 1,
wherein
a first one of said mating portion of said light source section housing and said mating portion of said body section housing has a positioning pin and a positioning face provided thereon while a second one of said mating portion of said light source section housing and said mating portion of said body section housing has provided thereon a positioning hole into which said positioning pin is inserted and a positioning face for abutting with the first-mentioned positioning face such that, when said mating portions are mated with each other, said positioning pin is inserted into said positioning hole and the two positioning faces are contacted with each other.

12. The projector unit according to claim 1,
wherein
said locking mechanism includes
an engaging pin provided on a first one of said light source section housing and said body section housing,
an engaging pawl provided for rocking motion on a second one of said light source section housing and said body section housing for engaging with said engaging pin, and
a spring provided on the second one of said light source section housing and said body section housing for biasing said engaging pawl in a rocking direction to a position at which said engaging pawl engages with said engaging pin,
a first one of said mating portion of said light source section housing and said mating portion of said body section housing having a positioning pin and a positioning face provided thereon while a second one of said mating portion of said light source section housing and said mating portion of said body section housing has provided thereon a positioning hole into which said positioning pin is inserted and a positioning face for abutting with the first-mentioned positioning face such that, when said mating portions are mated with each other, said positioning pin is inserted into said positioning hole and the two positioning faces are contacted with each other,
said engaging pawl having an engaging groove formed thereon for engaging with said engaging pin when said mating portion of said light source section housing and said mating portion of said body section housing are mated with each other,
said engaging groove being formed so as to engage with said engaging pin in a state wherein said positioning pin is inserted in said positioning hole and besides said positioning face of said light source section housing and said positioning face of said body section housing are positioned closely to each other,
said engaging groove having an inclined edge formed thereon for engaging, in the state wherein said positioning pin is inserted in said positioning hole and besides said positioning face of said light source section housing and said positioning face of said body section housing are positioned closely to each other, with said engaging pin to bias said engaging pin so as to be attracted to mate the positioning faces with each other and maintain the mated state of the positioning faces when said engaging pawl biased by said spring is rocked.

13. The projector unit according to claim 1,
wherein said body section includes:
an illuminating optical section for converting the light flux emitted from said light source section into parallel light;
a demultiplexing section for demultiplexing the parallel light from said illuminating optical section into a plurality of light fluxes of different wavelengths from each other;
an image formation section for modulating the light fluxes from said demultiplexing section with image information and multiplexing the modulated light fluxes to produce an image projection light flux; and
a projection section for projecting the image projection light flux to said screen;
said light source section housing being removably mounted on an illuminating optical section housing which forms said illuminating optical section.

14. The projector unit according to claim 13,
wherein
said image formation section is formed from a liquid crystal apparatus of the transmission type or the reflection type.

15. The projector unit according to claim 1,
wherein
said mating portion of said light source section housing and said mating portion of said body section housing have complementary connectors provided thereon, and
said connectors are electrically connected to each other to allow power to be supplied to said light source section when said mating portions are in the locked state, but when the locked state is canceled, the electric connection is canceled.

16. A projection television apparatus, comprising:
a projector unit for emitting an image projection light flux therefrom;
a screen; and
a reflecting member having a reflecting face for reflecting the image projection light flux toward a rear face of said screen;
said project unit including a light source section including a light source, and a body section for producing an image projection light flux from a light flux emitted from said light source section and emitting the produced image projection light flux;
said light source section including a light source section housing for supporting said light source;
said light source section housing being removably mounted on a body section housing which forms said body section;
said projector unit further including a locking mechanism for establishing a locked state wherein said mating portions of said light source section housing and said body section housing are mated with each other when said mating portion of said light source section housing is moved toward said mating portion of said body section housing and keeping the state in which said mating portions are mated with each other;
said projector unit further including an unlocking operation section for canceling the locked state.
